# EUROPÄISCHE PATENTSCHRIFT

(11) **EP 2 003 422 B1**
(45) Veröffentlichungstag und Bekanntmachung des Hinweises auf die Patenterteilung: **11.01.2012**
(21) Anmeldenummer: 08009001.2
(22) Anmeldetag: 15.05.2008
(51) Int. Cl.: G01C 21/36

(54) **Verfahren zum Betrieb eines Navigationssystems**
Method for operating a navigation system
Procédé destiné au fonctionnement d'un système de navigation

(30) Priorität: 14.06.2007 DE 102007027982; 26.07.2007 DE 102007035471
(43) Veröffentlichungstag der Anmeldung: 17.12.2008
(73) Patentinhaber: Navigon AG, 20251 Hamburg (DE)
(72) Erfinder: Mühlfelder, Mathias, 97082 Würzburg (DE)
(74) Vertreter: Böck, Bernhard

(56) Entgegenhaltungen:
- US-A- 6 064 322
- US-A1- 2004 243 307

## Beschreibung

Die Erfindung betrifft ein Verfahren zum Betrieb eines Navigationssystems.

Gattungsgemäße Navigationssysteme, beispielsweise mobile Navigationsgeräte, dienen dazu den Benutzer durch eine geeignete Routenführung von einem Startpunkt zu einem Zielpunkt zu führen. Dazu hat das Navigationssystem eine Eingabeeinrichtung, an der der Benutzer Bedienerbefehle, insbesondere Ortsangaben zur Spezifizierung des Startpunktes und/oder des Zielpunktes, eingeben kann. Unter Verwendung einer Wegnetzdatenbank, in der ein geographisches Gebiet in der Form maschinenlesbarer Daten beschrieben ist, wird durch eine Routenberechnungseinheit die geplante Route vom Startpunkt zum Zielpunkt berechnet.

Weiter umfassen die Navigationssysteme eine Signalempfangseinheit, mit der geeignete Positionssignale empfangen werden können. Dabei kann es sich insbesondere um Satellitensignale von GPS-Satelliten oder ähnlichen Satellitensystemen handeln. Auch ist die Weiterverarbeitung von Positionssignalen, wie sie aus der Zentralsteuerung eines Kraftfahrzeugs übermittelt werden, beispielsweise Geschwindigkeits- und Beschleunigungssignalen, denkbar. Mittels einer Positionsermittlungseinheit bestimmt das Navigationssystem dann die aktuelle Position aus den empfangenen Positionssignalen.

Zuletzt umfasst das Navigationssystem auch noch eine Ausgabeeinrichtung zur optischen bzw. akustischen Ausgabe von Signalen an den Benutzer. Als Ausgabeeinrichtung können insbesondere Bildschirmeinheiten oder Lautsprechereinheiten dienen. Gattungsgemäß ist die Ausgabeeinrichtung insbesondere dazu geeignet, in einem Simulationsmodus eine simulierte Routenvorschau optisch oder akustisch auszugeben. Die im Simulationsmodus simulierte Routenvorschau dient dazu, den Benutzer über die Funktionalität des Navigationssystems zu informieren. Insbesondere soll der Benutzer die Möglichkeit haben, das Navigationssystem vor dem Kauf unter realen Bedingungen, insbesondere mit realen Sprachansagen und mit realen Kartenansichten, auszuprobieren. Die Möglichkeit zur Prüfung der Funktionalität des Navigationssystems ist für die Kaufentscheidung von großer Bedeutung.

Bei bekannten Navigationssystemen muss für einen ordnungsgemäßen Betrieb im Normalmodus, um den Benutzer von einem Startpunkt zu einem Zielpunkt zu führen, nur der Zielpunkt eingegeben werden. Als Startpunkt wird üblicherweise die aktuelle Position, wie sie durch Auswertung der Positionssignale mittels der Positionsermittlungseinheit bestimmt wird, gesetzt. Diese Art der Bestimmung des Startpunktes führt im Simulationsmodus bekannter Navigationssysteme zu Problemen. Bei Ausstellung von Navigationsgeräten in einem Ladengeschäft ist der Empfang von GPS-Signalen regelmäßig nicht möglich, da die Satellitensignale durch den Baukörper des Ladengeschäfts abgedeckt werden. Aufgrund der fehlenden Satellitensignale kann also der Startpunkt durch Auswertung der aktuellen Position nicht in herkömmlicher Weise automatisch ermittelt werden. Um den Simulationsmodus zur Routensimulation auch in diesen Fällen der Unbestimmbarkeit der aktuellen Position durchführen zu können, ist die manuelle Eingabe des Startpunktes erforderlich. Untersuchungen haben jedoch gezeigt, dass die Kunden aufgrund ihrer Unerfahrenheit den Startpunkt regelmäßig nicht eingeben, da dies auch nicht dem normalen Bedienungsablauf bei Benutzung eines Navigationssystems entspricht. Aus diesem Grund wird der Simulationsmodus von den potentiellen Käufern üblicherweise nicht aktiviert. Dies ist von erheblichem Nachteil, da die Kaufentscheidung des Benutzers dann regelmäßig aufgrund irrationaler Kaufkriterien ohne Prüfung der zur Verfügung stehenden Funktionalität des Navigationssystems erfolgt.

Auch sind Verfahren bekannt, in denen die letzte bekannte, per Positionierungsmittel erfasste Position als Startpunkt verwendet wird. Üblicherweise haben in Ladengeschäften ausgestellte Geräte aber noch keine letzte Position empfangen. Auch die werksseitige Definition von festen Startpunkten für den Demonstrationsmodus kann zu unerwünscht langen Simulationsrouten führen oder durch die tatsächlich vorhandene Kartenbasis nicht abgedeckt sein.

Ausgehend von diesem Stand der Technik ist es deshalb Aufgabe der vorliegenden Erfindung, ein neues Verfahren zum Betrieb eines Navigationssystems vorzuschlagen, bei dem der Simulationsmodus sehr einfach und entsprechend der üblichen Bedienungspraxis auch im Normalmodus gestartet werden kann.

Diese Aufgabe wird durch ein Verfahren nach der Lehre des Anspruchs 1 gelöst.

Vorteilhafte Ausführungsformen der Erfindung sind Gegenstand der abhängigen Ansprüche.

Das erfindungsgemäße Verfahren beruht auf dem Grundgedanken, dass in dem Navigationssystem eine Startpunktableitungsregel hinterlegt ist. Durch die Startpunktableitungsregel kann ein Startpunkt für die Durchführung des Simulationsmodus aus dem vom Benutzer eingegebenen Zielpunkt ohne weiteres Zutun des Benutzers automatisch abgeleitet werden.

Bei Durchführung des erfindungsgemäßen Verfahrens gibt der Benutzer zunächst den gewünschten Zielpunkt ein. Ist die Durchführung eines Simulationsmodus zu diesem Zeitpunkt noch nicht möglich, da beispielsweise aufgrund fehlender Satellitensignale die aktuelle Position nicht als Startpunkt der Routenberechnung gesetzt werden kann, wird ein Startpunkt mittels der Startpunktableitungsregel aus dem eingegebenen bzw. ausgewählten Zielpunkt abgegeben. Damit stehen dann für die Durchführung des Simulationsmodus sowohl ein Zielpunkt als auch ein Startpunkt zur Verfügung, wobei der Zielpunkt vom Benutzer entsprechend den normalen Erwartungen eingegeben wurde, wohingegen der Startpunkt vom Navigationssystem ohne Zutun des Benutzers anhand der Startpunktableitungsregel automatisch abgeleitet ist.

Anschließend wird dann vom Navigationssystem im Rahmen seiner üblichen Funktionalität eine Route vom abgeleiteten Startpunkt zum eingegebenen Zielpunkt berechnet und eine simulierte Routenvorschau vom abgeleiteten Startpunkt zum eingegebenen Zielpunkt ausgegeben.

Durch das erfindungsgemäße Verfahren wird gewährleistet, dass der Benutzer zum Start des Simulationsmodus und zur Anzeige der simulierten Routenvorschau nur den gewünschten Zielpunkt eingeben muss, was der üblichen Benutzung eines Navigationssystems auch im Normalbetrieb entspricht. Die Eingabe des Startpunktes ist nicht erforderlich, da der Startpunkt vom Navigationssystem unter Einhaltung der vorgegebenen Startpunktableitungsregel automatisch aus dem eingegebenen Zielpunkt abgeleitet wird.

Bei Betrieb des Navigationssystems ist es je nach Positionierung des Navigationssystems denkbar, dass die aktuelle Position aus den Positionssignalen bestimmbar ist oder nicht. Ist die aktuelle Position aus den empfangenen Positionssignalen bestimmbar, so ist die Verwendung der aktuellen Position als Startpunkt für die simulierte Routenvorschau im Simulationsmodus vorzugswürdig. Nach einer bevorzugten Variante des erfindungsgemäßen Verfahrens ist es deshalb vorgesehen, dass das Navigationssystem nach Eingabe eines Zielpunktes zunächst überprüft, ob die aktuelle Position aus den Positionssignalen bestimmbar ist. Nur wenn die aktuelle Position aus den Positionssignalen nicht bestimmt werden kann, wird der Startpunkt mit der Startpunktableitungsregel aus dem Zielpunkt abgeleitet und der Simulationsmodus des Navigationssystems unter Verwendung des abgeleiteten Startpunktes gestartet. Kann die aktuelle Position dagegen aus den Positionssignalen bestimmt werden, wird die aktuelle Position als Startpunkt der simulierten Routenvorschau eingesetzt. Diese Verfahrensvariante ist darüber hinaus auch nach der Inbetriebnahme des Navigationssystems durch den Benutzer, d.h. nach der eigentlichen Kaufentscheidung, sinnvoll. Der Nutzer hat nämlich die Möglichkeit, zu Beginn seiner Fahrt sein Ziel einzugeben, wobei das Navigationssystem in den Fällen, in denen noch kein ausreichendes GPS-Signal zur Verfügung steht, zunächst eine Route im Simulationsmodus unter Verwendung eines mit der Startpunktableitungsregel abgeleiteten Startpunkts berechnet und anzeigt. Es handelt sich dabei zwar nicht um die Route, die den Benutzer von seinem aktuellen Standpunkt zum Zielpunkt führt. Dies ist aber regelmäßig unerheblich, da der Benutzer in den allermeisten Fällen die allerersten Streckenabschnitte von seinem aktuellen Standpunkt aus ohnehin kennt. Trotz fehlenden GPS-Signals kann dem Benutzer durch diese erfindungsgemäße Verfahrensvariante dann bereits eine Routenvorschau im Simulationsmodus angezeigt werden. Sobald ein ausreichendes Satellitensignal dann zur Verfügung steht, wird die Route automatisch vom aktuellen Standpunkt aus neu gerechnet und dem Benutzer im Normalmodus angezeigt.

In welcher Weise das erfindungsgemäße Verfahren gestartet wird, ist grundsätzlich beliebig. Nach einer ersten bevorzugten Verfahrensvariante ist vorgesehen, dass der Start des Simulationsmodus automatisch erfolgt, wenn die aktuelle Position aus den Positionssignalen nicht bestimmbar ist. Das heißt nach Eingabe eines Zielpunktes durch den Benutzer wird der Simulationsmodus unter Verwendung des mit der Startpunktableitungsregel abgeleiteten Startpunkts jeweils automatisch aktiviert.

Alternativ dazu kann auch vorgesehen sein, dass zunächst jeweils geprüft wird, ob die aktuelle Position mittels der Positionssignale bestimmbar ist. Ist dies nicht der Fall, kann die Zustimmung des Benutzers zum Start des Simulationsmodus unter Verwendung des abgeleiteten Startpunktes abgefragt werden. Nur wenn diese Abfrage vom Benutzer positiv bejaht wird, wird der Simulationsmodus dann gestartet.

Auch der Abbruch des Simulationsmodus und die Umschaltung in den Normalmodus kann in den Fällen, in denen nach anfänglicher Unbestimmbarkeit der aktuellen Position das Positionssignal wieder bestimmbar ist, von der Zustimmung des Benutzers abhängig gemacht werden. Dazu kann beispielsweise an der Ausgabeeinrichtung ein Abfragemenü eingeblendet werden, das der Benutzer entsprechend quittieren muss, um den Abbruch des Simulationsmodus zu bewirken.

Nach welchen Kriterien der Startpunkt durch die Startpunktableitungsregel aus dem eingegebenen Zielpunkt abgeleitet wird, ist grundsätzlich beliebig. Gemäß einer bevorzugten Verfahrensvariante wird in der Startpunktableitungsregel festgelegt, dass der abgeleitete Startpunkt in der gleichen Stadt oder im gleichen Ort wie der eingegebene Zielpunkt liegt. Dadurch wird gewährleistet, dass in der simulierten Routenvorschau eine Route angezeigt wird, die von einem Startpunkt zu einem Zielpunkt in der gleichen Stadt bzw. im gleichen Ort führt und der Startpunkt auch tatsächlich existiert. Da es sich dabei zudem um den Ort bzw. um die Stadt handelt, die der Benutzer durch seine Eingabe des Zielpunktes festgelegt hat, ist gewährleistet, dass der Benutzer einen Bezug zu der angezeigten Routenvorschau hat. Außerdem wird die angezeigte Routenvorschau regelmäßig eine geeignete Länge aufweisen, um dem Benutzer im Simulationsmodus in nicht allzu langer Zeit einen charakteristischen Eindruck der Funktionalität des Navigationssystems zu geben.

Der eingegebene bzw. ausgewählte Zielpunkt könnte je nach Eingabe- bzw. Auswahlart, z.B. bei einem POI, einem Adressbucheintrag oder einer ausgewählten Koordinate, noch keine zugeordnete Gemeinde aufweisen. In diesem Fall ist es vorteilhaft, wenn aufgrund der Position des Zielpunktes mittels Verwendung der Kartendatenbank zunächst die Gemeinde, in der sich der Punkt befindet, analysiert wird und dann mit der Durchführung der Startpunktableitungsregel fortgefahren wird.

Insofern der durch die Startpunktableitungsregel abgeleitete Startpunkt in der gleichen Stadt bzw. im gleichen Ort wie der Zielpunkt liegt, ist es besonders vorteilhaft, wenn der Startpunkt im Zentrum dieser Stadt bzw. im Zentrum dieses Ortes angeordnet ist. Denn das Zentrum einer Stadt bzw. eines Ortes ist den Benutzern regelmäßig bekannt, so dass in der simulierten Routenvorschau eine Route vom Zentrum zum eingegebenen Zielpunkt angezeigt wird, die dem Benutzer aufgrund seiner Ortskenntnis regelmäßig bekannt sein sollte. Insofern kann der Benutzer in der simulierten Routenvorschau die Funktionalität des Navigationssystems anhand seiner eigenen Ortskenntnis überprüfen. Außerdem ist durch die Anordnung des Startpunktes im Zentrum der Stadt bzw. des Ortes gewährleistet, dass die Routen der simulierten Routenvorschau in aller Regel eine relativ kurze Länge haben, da das Zentrum einer Stadt bzw. eines Ortes relativ zu allen anderen Punkten des Ortes bzw. der Stadt eine minimale Entfernung aufweist.

Um die automatische Bestimmung eines Startpunktes abgeleitet aus den Zielpunktangaben zu ermöglichen, ist es besonders vorteilhaft, wenn auf die im Kartenmaterial gekennzeichneten bevorzugten Punkte, die üblicherweise als Point of Interest (POI) bezeichnet werden, zurückgegriffen wird. Diese Points of Interest sind in dem maschinenlesbaren Kartenmaterial der Wegnetzdatenbank eindeutig spezifiziert und können von dem Navigationssystem in einfacher Weise unter Verwendung der Startpunktableitungsregel selektiert werden.

Um einen Point of Interest im Zentrum einer Stadt oder eines Ortes automatisch durch das Navigationssystem zu identifizieren, ist es besonders vorteilhaft, wenn auf die im Kartenmaterial spezifizierten Kategorien zurückgegriffen wird. Üblicherweise ist beispielsweise eine Kategorie "CityCenter" vorgesehen, die Points of Interest im Stadtzentrum bzw. im Ortszentrum charakterisiert. Wird nach dieser Kategorie in den Points of Interest einer Stadt gesucht, kann automatisch das Stadt- bzw. Ortszentrum selektiert werden.

Auch ist es vorteilhaft, für solche Orte, für die kein "CityCenter"-Point of Interest in der Kartendatenbank hinterlegt ist, in einem Vorverarbeitungsschritt der Kartenaufbereitung durch geometrische Verfahren einen entsprechenden Alternativpunkt für das CityCenter zu definieren.

Für die Anzeige der simulierten Routenvorschau ist es von Bedeutung, dass die Routenvorschau weder zu lang noch zu kurz ist. Es ist deshalb besonders vorteilhaft, wenn nach der Ableitung des Startpunktes aus dem Zielpunkt der Abstand zwischen dem abgeleiteten Startpunkt und dem eingegebenen Zielpunkt bzw. die Länge der sich daraus ergebenden Routenvorschau bestimmt und mit vorbestimmten Werten eines Höchstabstands und/oder einer Höchstlänge bzw. eines Mindestabstands und/oder Mindestlänge verglichen wird. Überschreitet bzw. unterschreitet der Abstand zwischen Startpunkt und Zielpunkt bzw. die Länge der Routenvorschau die im Navigationssystem vorbestimmten Höchst- bzw. Mindestwerte, kann der mit der Startpunktableitungsregel abgeleitete erste Startpunkt verworfen und mit einer zweiten Startpunktableitungsregel ein zweiter Startpunkt bestimmt werden. Dieser zweite Startpunkt kann dann selbstverständlich wiederum einer Überprüfung unterworfen und gegebenenfalls verworfen werden. Für die Strukturierung der zweiten Startpunktableitungsregel gibt es wiederum eine Vielzahl von Möglichkeiten. Gemäß einer bevorzugten Variante wird durch die zweite Startpunktableitungsregel vorbestimmt, dass der zweite Startpunkt ein Point of Interest ist, der innerhalb eines Umkreises mit vorbestimmtem Suchradius um den ersten abgeleiteten Startpunkt liegt. Der Suchradius des Umkreises um den ersten Startpunkt zur Bestimmung des zweiten Startpunktes sollte dabei bevorzugt schrittweise vergrößert werden. Sobald sich dann ein erster bevorzugter Punkt (Point of Interest) im Suchradius befindet, wird die Suche nach dem zweiten Startpunkt abgebrochen und anschließend gegebenenfalls der Abstand zwischen dem zweiten Startpunkt und dem eingegebenen Zielpunkt bzw. die sich daraus ergebende Länge der Routenvorschau wiederum überprüft.

Der zweite Startpunkt sollte wiederum bevorzugt innerhalb der gleichen Stadt bzw. innerhalb des gleichen Ortes wie der Zielpunkt liegen, wobei in diesen Fällen der zweite Startpunkt einer anderen Kategorie als der erste Startpunkt angehören sollte. Dadurch ist gewährleistet, dass die Suche nach dem zweiten Startpunkt regelmäßig zu geeigneten Ergebnissen führt. Auch ein durch geometrische Methoden ermittelter Alternativpunkt für das Citycenter kann hierbei berücksichtigt werden.

Um dem Benutzer in der simulierten Routenvorschau des Simulationsmodus einen möglichst breiten Überblick über die Funktionalität des Navigationssystems geben zu können, sollte die Route während der Routenvorschau des Simulationsmodus mit einem vorgegebenen Geschwindigkeitsprofil abgefahren werden. Zugleich sollten dem Benutzer dann während der Anzeige der Routenvorschau die jeweils erforderlichen Manöveranweisungen, die im normalen Modus während der Fahrt ausgegeben werden, optisch und/oder akustisch angezeigt bzw. angesagt werden.

Darüber hinaus ist es besonders vorteilhaft, wenn der Benutzer während der Routenvorschau auch interaktive Benutzerbefehle eingeben kann, um auch diesbezüglich die Funktionalität des Navigationssystems im Normalmodul durch Benutzung im Simulationsmodus zu demonstrieren. Dazu gehört z.B. der mögliche Wechsel zwischen verschiedenen Kartenmodi, wie einem 2D und einem 3D-Modus, der Wechsel zwischen einem Tag/Nacht-Farbschema, Zoomen und Pannen in der Karte, die Möglichkeit, Routenabschnitte zu sperren und/oder weitere Zwischenpunkte zu setzen. Auch ist denkbar, dass bei Vorliegen von Verkehrsmeldungen, z.B. über TMC, diese automatisch oder nach Rückfrage berücksichtigt und umfahren werden.

Um eine versehentliche Aktivierung des Simulationsmodus auszuschließen, ist es besonders vorteilhaft, wenn bei der Ausgabe der simulierten Routenvorschau ein der simulierten Routenvorschau zugeordnetes Kennzeichnungselement ausgegeben, insbesondere am Bildschirm angezeigt, wird. Beispielsweise könnten die Ausdrücke "Demo" oder "Simulation" am Bildschirm angezeigt werden, um den Benutzer darauf aufmerksam zu machen, dass die angezeigte Routenvorschau eine Simulation darstellt und keiner tatsächlich gewünschten Route entspricht.

Verschiedene Aspekte der Erfindung sind in den Zeichnungen schematisch dargestellt und werden nachfolgend beispielhaft erläutert.

Es zeigen:
- Fig. 1: den Touch Screen eines mobilen Navigationsgerätes bei Eingabe eines Zielpunktes;
- Fig. 2: den Touch Screen gemäß Fig. 2 bei Anzeige eines Abfragemenüs zum Start des Simulationsmodus;
- Fig. 3: den Touch Screen gemäß Fig. 1 bei Anzeige einer simulierten Routenvorschau.

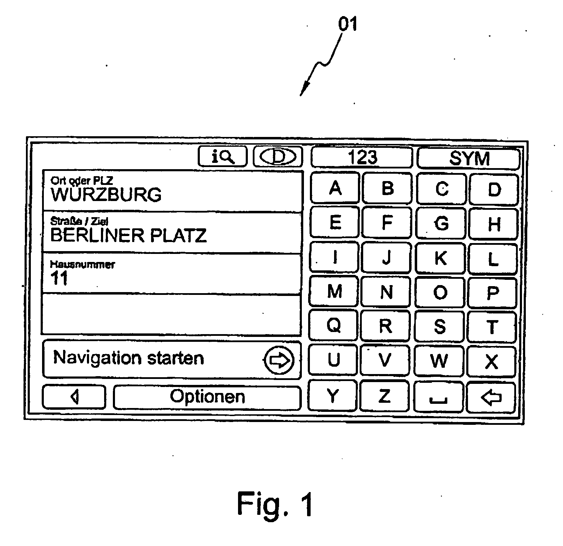

Fig. 1 zeigt die Anzeige an einem Touch Screen 01 bei Eingabe eines Zielpunktes. Das Navigationssystem befindet sich dabei beispielsweise in einem Ladengeschäft und kann aufgrund der Abdeckung der Navigationssatelliten keine Positionssignale von den GPS-Signalen empfangen.

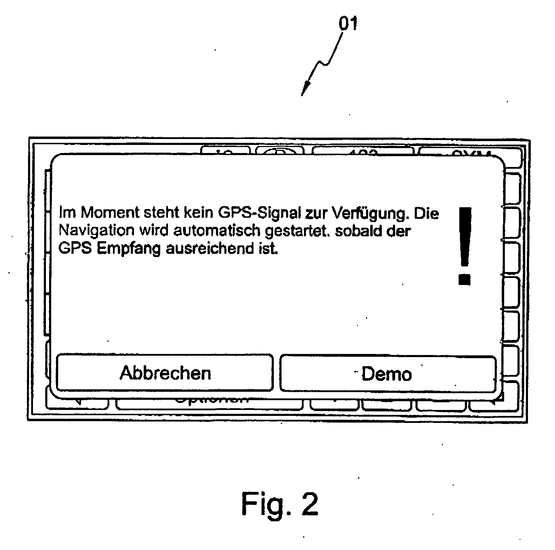

Nach Eingabe des Zielpunktes "Würzburg, Berliner Platz, 11" wird der Navigationsbetrieb durch Drücken der Taste "Navigation starten" vom Benutzer gestartet. Danach wird vom Navigationssystem automatisch überprüft, ob die aktuelle Position durch Auswertung von GPS-Signalen bestimmbar ist. Ist dies nicht der Fall, wird das in Fig. 2 dargestellte Auswahlmenü angezeigt.

Wie in Fig. 2 dargestellt, erhält der Benutzer die Information, dass ein GPS-Signal nicht in ausreichender Stärke empfangen werden kann. Zugleich wird ihm ein Simulationsmodus durch Drücken der Taste "Demo" angeboten. Drückt der Benutzer die Taste "Demo" wird der Simulationsmodus gestartet und aus dem Zielpunkt "Würzburg, Berliner Platz, 11" ein Startpunkt für die Berechnung einer simulierten Routenvorschau abgeleitet. Beispielsweise kann als Startpunkt gemäß der Startpunktableitungsregel im Navigationssystem abgeleitet werden, dass der Startpunkt der Point of Interest der Kategorie "CityCenter" in der Stadt Würzburg ist. Sobald die Koordinaten dieses POI aus der Wegnetzdatenbank selektiert sind, wird eine Route vom Point of Interest der Kategorie "CityCenter" in Würzburg zum Zielpunkt am Berliner Platz 11 berechnet und als simulierte Routenvorschau angezeigt.

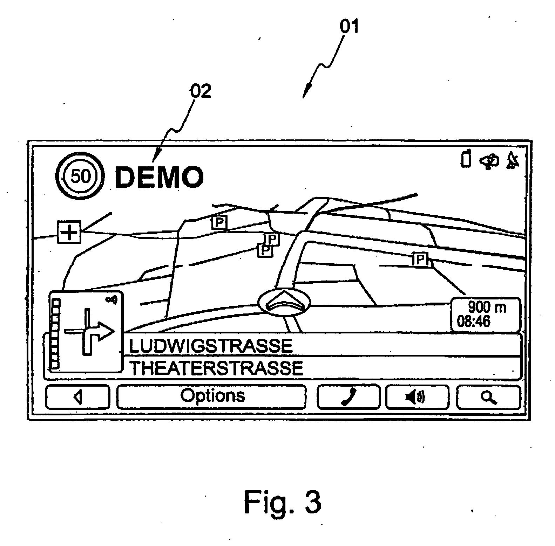

Fig. 3 zeigt die simulierte Routenvorschau am Touch Screen 01. Die Anzeige entspricht dabei vollständig der Anzeige einer Routenvorschau im Normalmodus mit allen entsprechenden Funktionalitäten. Um den Benutzer darauf aufmerksam zu machen, dass es sich lediglich um eine simulierte Routenvorschau handelt, wird in der linken oberen Ecke des

Touch Screens 01 ein Kennzeichnungselement 02 "Demo" eingeblendet.

## Patentansprüche

1. Verfahren zum Betrieb eines Navigationssystems, umfassend
- eine Eingabeeinrichtung, an der Bedienerbefehle und/oder Ortsangaben, insbesondere Startpunkte und/oder Zielpunkte, eingegeben werden können,
- eine Wegnetzdatenbank,
- eine Routenberechnungseinheit zur Berechnung einer geplanten Route unter Berücksichtigung der Ortsangaben und der Wegenetzdatenbank, wobei die Route vom Startpunkt zum Zielpunkt führt,
- eine Signalempfangseinheit zum Empfang von Positionssignalen, insbesondere GPS-Signalen,
- eine Positionsermittlungseinheit, die die aktuelle Position aus den Positionssignalen bestimmt,
- zumindest eine optische und/oder akustische Ausgabeeinrichtung (01), mit der in einem Simulationsmodus eine simulierte Routenvorschau optisch und/oder akustisch ausgegeben werden kann, wobei die simulierte Routenvorschau die Routenführung von einem Startpunkt zu einem Zielpunkt simuliert,
mit folgenden Verfahrensschritten:
a) Eingabe eines Zielpunktes;
b) Ableitung eines Startpunktes aus dem eingegebenen Zielpunkt unter Verwendung einer Startpunktableitungsregel;
c) Berechnung einer Route vom abgeleiteten Startpunkt zum eingegebenen Zielpunkt;
d) Ausgabe der simulierten Routenvorschau vom abgeleiteten Startpunkt zum eingegebenen Zielpunkt.

2. Verfahren nach Anspruch 1,
**dadurch gekennzeichnet,**
**dass** nach Eingabe des Zielpunktes vom Navigationssystcm geprüft wird, ob die aktuelle Position aus den Positionssignalen bestimmbar ist, wobei bei Unbestimmbarkeit der aktuellen Position aus den Positionssignalen der Startpunkt mit der Startpunktableitungsregel aus dem Zielpunkt abgeleitet und der Simulationsmodus des Navigationssystems gestartet wird.

3. Verfahren nach Anspruch 1 oder 2,
**dadurch gekennzeichnet,**
**dass** nach Start des Simulationsmodus vom Navigationssystem geprüft wird, ob die aktuelle Position aus den Positionssignalen bestimmbar ist, wobei bei Bestimmbarkeit der aktuellen Position aus den Positionssignalen die aktuelle Position als Startpunkt gesetzt und nach Abbruch des Simulationsmodus der Normalmodus des Navigationssystems gestartet wird.

4. Verfahren nach Anspruch 3,
**dadurch gekennzeichnet,**
**dass** der Abbruch des Simulationsmodus automatisch erfolgt, wenn die aktuelle Position aus den Positionssignalen bestimmbar ist.

5. Verfahren nach Anspruch 3,
**dadurch gekennzeichnet,**
**dass** der Abbruch des Simulationsmodus erfolgt, wenn die aktuelle Position aus den Positionssignalen bestimmbar ist und die Zustimmung des Benutzers zum Abbruch des Simulationsmodus positiv abgefragt ist.

6. Verfahren nach einem der Ansprüche 1 bis 4,
**dadurch gekennzeichnet,**
**dass** der Start des Simulationsmodus automatisch erfolgt, wenn die aktuelle Position aus den Positionssignalen nicht bestimmbar ist.

7. Verfahren nach einem der Ansprüche 1 bis 4,
**dadurch gekennzeichnet,**
**dass** der Start des Simulationsmodus erfolgt, wenn die aktuelle Position aus den Positionssignalen nicht bestimmbar ist und die Zustimmung des Benutzers zum Start des Simulationsmodus positiv abgefragt ist.

8. Verfahren nach einem der Ansprüche 1 bis 7,
**dadurch gekennzeichnet,**
**dass** die Startpunktableitungsregel vorbestimmt, dass der abgeleitete Startpunkt in der gleichen Stadt oder im gleichen Ort wie der eingegebene Zielpunkt liegt.

9. Verfahren nach Anspruch 8,
**dadurch gekennzeichnet,**
**dass** der abgeleitete Startpunkt ein bevorzugter Punkt im Zentrum der gleichen Stadt oder im Zentrum des gleichen Ortes wie der Zielpunkt liegt.

10. Verfahren nach einem der Ansprüche 1 bis 9,
**dadurch gekennzeichnet,**
**dass** der abgeleitete Startpunkt ein bevorzugter Punkt (Point of Interest / POI) einer bestimmten Kategorie ist, der in der gleichen Stadt oder im gleichen Ort wie der Zielpunkt liegt.

11. Verfahren nach Anspruch 10,
**dadurch gekennzeichnet,**
**dass** der abgeleitete Startpunkt ein bevorzugter Punkt (Point of Interest / POI) ist, der einer Kategorie angehört, die das Zentrum eines Ortes oder einer Stadt kennzeichnet, insbesondere dass der bevorzugter Punkt der Kategorie "CityCenter" angehört.

12. Verfahren nach einem der Ansprüche 1 bis 11,
**dadurch gekennzeichnet,**
**dass** nach der Ableitung des Startpunktes der Abstand zwischen dem abgeleiteten Startpunkt und dem eingegebenen Zielpunkt und/oder die Länge der Routenvorschau bestimmt wird, wobei bei Unterschreitung eines vorbestimmten Mindestabstandes und/oder bei Unterschreitung eine vorbestimmten Mindestlänge ein neuer Startpunkt mit einer zweiten Startpunktableitungsregel aus dem eingegebenen Zielpunkt abgeleitet wird.

13. Verfahren nach Anspruch 12,
**dadurch gekennzeichnet,**
**dass** die zweite Startpunktableitungsregel vorbestimmt, dass der zweite Startpunkt ein bevorzugter Punkt (Point of Interest / POI) ist, der innerhalb eines Umkreises mit vorbestimmtem Suchradius um den ersten abgeleiteten Startpunkt liegt.

14. Verfahren nach Anspruch 13,
**dadurch gekennzeichnet,**
**dass** der Suchradius des Umkreises um den ersten Startpunkt schrittweise vergrößert wird, bis zumindest ein bevorzugter Punkt (Point of Interest / POI) bestimmt ist.

15. Verfahren nach einem der Ansprüche 1 bis 14,
**dadurch gekennzeichnet,**
**dass** nach der Ableitung des Startpunktes der Abstand zwischen dem abgeleiteten Startpunkt und dem eingegebener Zielpunkt und/oder die Länge der Routenvorschau bestimmt wird, wobei bei Überschreitung eines vorbestimmten Höchstabstandes und/oder bei Überschreitung einer vorbestimmten Höchstlänge ein neuer Startpunkt mit einer dritten Startpunktableitungsregel aus dem eingegebenen Zielpunkt abgeleitet wird.

16. Verfahren nach einem der Ansprüche 12 bis 15,
**dadurch gekennzeichnet,**
**dass** die zweite und/oder dritte Startpunktableitungsregel vorbestimmt, dass der neue Startpunkt ein bevorzugter Punkt (Point of Interest / POI) ist, der in der gleichen Stadt oder im gleichen Ort wie der Zielpunkt liegt und eine andere Kategorie als der erste Startpunkt aufweist.

17. Verfahren nach einem der Ansprüche 1 bis 16,
**dadurch gekennzeichnet,**
**dass** in der Routenvorschau des Simulationsmodus die Route vom abgeleiteten Startpunkt zum eingegebene Zielpunkt mit einem vorgegebenen Geschwindigkeitsprofil angefahren wird, wobei die entlang der Route erforderlichen Manöveranweisungen optisch und/oder akustisch ausgegeben werden.

18. Verfahren nach einem der Ansprüche 1 bis 17,
**dadurch gekennzeichnet,**
**dass** in der Routcnvorschau des Simulationsmodus zumindest teilweise interaktive Benutzerbefehle angenommen werden, die auch im Normalmodus des Navigationssystems zur Verfugung stehen.

19. Verfahren nach einem der Ansprüche 1 bis 18,
**dadurch gekennzeichnet,**
**dass** bei Ausgabe der simulierten Routenvorschau ein der simulierten Routcnvorschau zugeordnetes Kennzeichnungselement (02) ausgegeben, insbesondere angezeigt, wird.

## Claims

1. A method for operating a navigation system comprising:
- an input device for inputting operator commands and/or location information, particularly starting points and/or destinations,
- a road network database,
- a route calculating unit for calculating a planned route with consideration of the location information and the road network database, wherein the route leads from the starting point to the destination,
- a signal receiving unit for receiving position signals, particularly GPS signals,
- a position finding unit that determines the current position from the position signals, and
- at least one optical and/or acoustical output device (01) for optically and/or acoustically outputting a simulated route preview in a simulation mode, wherein the simulated route preview simulates the route navigation from a starting point to a destination,
and wherein said method features the following steps:
a) inputting a destination;
b) deriving a starting point from the destination being input by utilizing a starting point derivation rule;
c) calculating a route from the derived starting point to the destination being input, and
d) outputting the simulated route preview from the derived starting point to the destination being input.

2. The method according to Claim 1,
**characterized in that**
the navigation system checks if the current position can be determined from the position signals after a destination has been input, wherein the starting point is derived from the destination with the aid of the starting point derivation rule and the simulation mode of the navigation system is started if the current position cannot be determined from the position signals.

3. The method according to Claim 1 or 2,
**characterized in that**
the navigation system checks if the current position can be determined from the position signals after the simulation mode has been started, wherein the current position is set as the starting point and the normal mode of the navigation system is started after the termination of the simulation mode if the current position can be determined from the position signals.

4. The method according to Claim 3,
**characterized in that**
the simulation mode is automatically terminated if the current position can be determined from the position signals.

5. The method according to Claim 3,
**characterized in that**
the simulation mode is terminated if the current position can be determined from the position signals and the user consents to an inquiry whether to terminate the simulation mode with a positive response.

6. The method according to one of Claims 1 to 4,
**characterized in that**
the simulation mode is automatically started if the current position cannot be determined from the position signals.

7. The method according to one of Claims 1 to 4,
**characterized in that**
the simulation mode is started if the current position cannot be determined from the position signals and the user consents to an inquiry whether to start the simulation mode with a positive response.

8. The method according to one of Claims 1 to 7,
**characterized in that**
the starting point derivation rule specifies that the derived starting point lies in the same city or in the same town as the destination being input.

9. The method according to Claim 8,
**characterized in that**
the derived starting point is a preferred point in the center of the same city or in the center of the same town as the destination.

10. The method according to one of Claims 1 to 9,
**characterized in that**
the derived starting point is a preferred point (Point of Interest / POI) of a certain category that lies in the same city or in the same town as the destination.

11. The method according to Claim 10,
**characterized in that**
the derived starting point is a preferred point (Point of Interest / POI) of a category that characterizes the center of a town or a city, particularly that the preferred point falls under the category "CityCenter."

12. The method according to one of Claims 1 to 11,
**characterized in that**
the distance between the derived starting point and the destination being input and/or the length of the route preview is determined after the starting point has been derived, wherein a new starting point is derived from the destination being input with the aid of a second starting point derivation rule if the distance falls short of a predetermined minimum distance and/or the length falls short of a predetermined minimum length.

13. The method according to Claim 12,
**characterized in that**
the second starting point derivation rule specifies that the second starting point is a preferred point (Point of Interest / POI) that lies within a predetermined search radius around the first derived starting point.

14. The method according to Claim 13,
**characterized in that**
the search radius around the first starting point is increased incrementally until at least one preferred point (Point of Interest / POI) is determined.

15. The method according to one of Claims 1 to 14,
**characterized in that**
the distance between the derived starting point and the destination being input and/or the length of the route preview is determined after the starting point has been derived, wherein a new starting point is derived from the destination being input with the aid of a third starting point derivation rule if the distance exceeds a predetermined maximum distance and/or the length exceeds a predetermined maximum length.

16. The method according to one of Claims 12 to 15,
**characterized in that**
the second and/or third starting point derivation rule specifies that the new starting point is a preferred point (Point of Interest / POI) that lies in the same city or in the same town as the destination and falls under a different category than the first starting point.

17. The method according to one of Claims 1 to 16,
**characterized in that**
the route from the derived starting point to the destination being input is driven with a predetermined speed profile in the route preview of the simulation mode, wherein the maneuvering instructions required along the route are optically and/or acoustically output.

18. The method according to one of Claims 1 to 17,
**characterized in that**
at least partially interactive user commands that are also available in the normal mode of the navigation system are accepted during the route preview of the simulation mode.

19. The method according to one of Claims 1 to 18,
**characterized in that**
an identification element (02) assigned to the simulated route preview is output, particularly displayed, during the output of the simulated route preview.

## Revendications

1. Procédé d'opération d'un système de navigation, comprenant:
- un dispositif d'entrée pour entrer des commandes d'opérateur et/ou des informations de lieu, en particulier des points de départ et/ou des destinations,
- une base de données de réseaux routiers,
- une unité de calcul d'itinéraire pour calculer un itinéraire prévu en considération des informations de lieu et de la base de données des réseaux routiers, l'itinéraire passant à partir du point de départ jusqu'à la destination,
- une unité de réception de signaux pour recevoir des signaux de position, en particulier des signaux GPS,
- une unité de détermination de position pour déterminer la position actuelle à partir des signaux de position, et
- au moins un dispositif de sortie optique et/ou acoustique (01) pour sortir de manière optique et/ou acoustique un aperçu de l'itinéraire simulé dans un mode de simulation, l'aperçu de l'itinéraire simulé simulant la navigation de l'itinéraire à partir d'un point de départ jusqu'à une destination,
ledit procédé comprenant les étapes suivantes:
a) entrée d'une destination;
b) dérivation d'un point de départ à partir de la destination entrée en utilisant une règle de dérivation de point de départ
c) calcul d'un itinéraire à partir du point de départ dérivé jusqu'à la destination entrée, et
d) sortie de l'aperçu de l'itinéraire simulé à partir du point de départ dérivé jusqu'à la destination entrée.

2. Procédé selon la revendication 1,
**caractérisé en ce que**
le système de navigation vérifie si la position actuelle peut être déterminée à partir des signaux de position après l'entrée d'une destination, le point de départ étant dérivé à partir de la destination à l'aide de la règle de dérivation de point de départ et le mode de simulation du système de navigation étant lancé si la position actuelle ne peut pas être déterminée à partir des signaux de position.

3. Procédé selon la revendication 1 ou 2,
**caractérisé en ce que**
le système de navigation vérifie si la position actuelle peut être déterminée à partir des signaux de position après le lancement du mode de simulation, la position actuelle étant fixée comme point de départ et le mode normal étant lancé après que le mode de simulation ait été terminé si la position actuelle peut être déterminée à partir des signaux de position.

4. Procédé selon la revendication 3,
**caractérisé en ce que**
le mode de simulation est terminé automatiquement si la position actuelle peut être déterminée à partir des signaux de position.

5. Procédé selon la revendication 3,
**caractérisé en ce que**
le mode de simulation est terminé si la position actuelle peut être déterminée à partir des signaux de position et si l'utilisateur consent à une enquête de terminer le mode de simulation avec une réponse affirmative.

6. Procédé selon l'une quelconque des revendications 1 à 4,
**caractérisé en ce que**
le mode de simulation est lancé automatiquement si la position actuelle ne peut pas être déterminée à partir des signaux de position.

7. Procédé selon l'une quelconque des revendications 1 à 4,
**caractérisé en ce que**
le mode de simulation est lancé si la position actuelle ne peut pas être déterminée à partir des signaux de position et si l'utilisateur consent à une enquête de lancer le mode de simulation avec une réponse affirmative.

8. Procédé selon l'une quelconque des revendications 1 à 7,
**caractérisé en ce que**
la règle de dérivation de point de départ spécifie que le point de départ dérivé se trouve dans la même ville ou dans la même localité que la destination entrée.

9. Procédé selon la revendication 8,
**caractérisé en ce que**
le point de départ dérivé est un point préféré dans le centre de la même ville ou dans le centre de la même localité que la destination.

10. Procédé selon l'une quelconque des revendications 1 à 9,
**caractérisé en ce que**
le point de départ dérivé est un point préféré (point d'intérêt / POI) d'une certaine catégorie se trouvant dans la même ville ou dans la même localité que la destination.

11. Procédé selon la revendication 10,
**caractérisé en ce que**
le point de départ dérivé est un point préféré (point d'intérêt / POI) d'une catégorie caractérisant le centre d'une localité ou le centre d'une ville, en particulier **en ce que** le point préféré fait partie de la catégorie "CentreVille".

12. Procédé selon l'une quelconque des revendications 1 à 11,
**caractérisé en ce que**
la distance entre le point de départ dérivé et la destination entrée et/ou la longueur de l'aperçu de l'itinéraire est déterminée après la dérivation du point de départ, un nouveau point de départ étant dérivé à partir de la destination entrée à l'aide d'une deuxième règle de dérivation de point de départ si la distance est inférieure à une distance minimale prédéterminée et/ou si la longueur est inférieure à une longueur minimale prédéterminée.

13. Procédé selon la revendication 12,
**caractérisé en ce que**
la deuxième règle de dérivation de point de départ spécifie que le deuxième point de départ est un point préféré (point d'intérêt / POI) se trouvant dans un rayon de recherche prédéterminé autour du premier point de départ dérivé.

14. Procédé selon la revendication 13,
**caractérisé en ce que**
le rayon de recherche autour du premier point de départ est augmenté progressivement jusqu'à ce qu'au moins un point préféré (point d'intérêt / POI) ait été déterminé.

15. Procédé selon l'une quelconque des revendications 1 à 14,
**caractérisé en ce que**
la distance entre le point de départ dérivé et la destination entrée et/ou la longueur de l'aperçu de l'itinéraire est déterminée après la dérivation du point de départ, un nouveau point de départ étant dérivé à partir de la destination entrée à l'aide d'une troisième règle de dérivation de point de départ si la distance dépasse une distance maximale prédéterminée et/ou si la longueur dépasse une longueur maximale prédéterminée.

16. Procédé selon l'une quelconque des revendications 12 à 15,
**caractérisé en ce que**
la deuxième et/ou la troisième règle de dérivation de point de départ spécifie que le nouveau point de départ est un point préféré (point d'intérêt / POI) se trouvant dans la même ville ou dans la même localité que la destination et appartenant à une catégorie différente du premier point de départ.

17. Procédé selon l'une quelconque des revendications 1 à 16,
**caractérisé en ce que**
l'itinéraire passant à partir du point de départ dérivé jusqu'à la destination entrée est parcouru avec un profil de vitesse prédéterminé dans l'aperçu de l'itinéraire du mode de simulation, les instructions de manoeuvre requises le long de l'itinéraire étant sorties de manière optique et/ou acoustique.

18. Procédé selon l'une quelconque des revendications 1 à 17,
**caractérisé en ce que**
des commandes d'utilisateur étant au moins partiellement interactives et étant aussi disponibles dans le mode normal du système de navigation, sont acceptées pendant l'aperçu de l'itinéraire du mode de simulation.

19. Procédé selon l'une quelconque des revendications 1 à 18,
**caractérisé en ce qu'**
un élément d'identification (02) associé à l'aperçu de l'itinéraire simulé est sorti, en particulier affiché, pendant la sortie de l'aperçu de l'itinéraire simulé.
